# EUROPÄISCHE PATENTSCHRIFT

(11) **EP 4 607 074 B1**
(45) Veröffentlichungstag und Bekanntmachung des Hinweises auf die Patenterteilung: **18.11.2026**
(21) Anmeldenummer: 24159705.3
(22) Anmeldetag: 26.02.2024
(51) Int. Cl.: F16L 19/10

(54) **ROHRVERSCHRAUBUNG, VERWENDUNG EINER SOLCHEN ROHRVERSCHRAUBUNG UND VERFAHREN ZUR HERSTELLUNG EINER VERBINDUNG ZWISCHEN EINEM ROHR UND EINER SOLCHEN VERSCHRAUBUNG**
PIPE FITTING, USE OF SUCH A PIPE FITTING AND METHOD FOR PRODUCING A CONNECTION BETWEEN A PIPE AND SUCH A FITTING
RACCORD FILETÉ POUR TUYAUX, UTILISATION D'UN TEL RACCORD FILETÉ POUR TUYAUX ET PROCÉDÉ DE FABRICATION D'UN RACCORD ENTRE UN TUYAU ET UN TEL RACCORD FILETÉ

(43) Veröffentlichungstag der Anmeldung: 27.08.2025
(73) Patentinhaber: Schwer Fittings GmbH, 78588 Denkingen (DE)
(72) Erfinder: EMMINGER, Rober, 78126 Königsfeld im Schwarzwald, Erdmannsweiler (DE)
(74) Vertreter: Patentanwälte und Rechtsanwalt Weiß, Arat & Partner mbB

(56) Entgegenhaltungen:
- GB-A- 743 690
- US-B2- 6 641 180
- US-B2- 7 695 027

## Beschreibung

### Technisches Gebiet

Die Erfindung betrifft eine Rohrverschraubung, eine Verwendung einer solchen Rohrverschraubung und ein Verfahren zur Herstellung einer Verbindung zwischen einem Rohr und einer solchen Rohrverschraubung gemäss den unabhängigen Ansprüchen.

### Stand der Technik

Rohrverschraubungen sind aus dem Stand der Technik bekannt. Beispielsweise zeigt die AT 270316 B eine Rohrverschraubung aus einem Anschlussstück, einem mit mehreren Schneiden versehenen Dichtungsring und einer Überwurfmutter.

US 7 695 027 B2 offenbart eine Rohrverschraubung, umfassend einen Stutzen, einen Schneidring und ein Gegenlager, wobei im Inneren des Schneidrings eine Schneidkante angeordnet ist.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führen die Gegenstände der unabhängigen Ansprüche. Vorteilhafte Ausgestaltungen sind in den Unteransprüchen beschrieben.

Die vorliegende Erfindung betrifft eine Rohrverschraubung umfassend einen Stutzen, einen Schneidring und ein Gegenlager. Der Stutzen ist eingerichtet zur Aufnahme und Lagerung eines zu einem Rohr gehörenden Rohrendabschnitts und des Schneidrings sowie zur zumindest teilweisen Aufnahme des Gegenlagers. Der Rohrendabschnitt und der Schneidring können vollständig in den Stutzen eingebracht werden. Das Gegenlager kann beispielsweise ein Aussengewinde umfassen, welches mit einem Innengewinde des Stutzens verschraubt wird. Hierbei nimmt der Stutzen das Gegenlager vorzugsweise nicht vollständig auf. Beispielsweise kann daran gedacht sein, dass ein Aussensechskant des Gegenlagers in Gebrauchslage nicht innerhalb des Stutzens angeordnet ist.

Das Gegenlager dient vorzugsweise dazu, den Schneidring mit einer Kraft zu beaufschlagen und in den Stutzen hineinzudrücken, und gleichzeitig zu verhindern, dass der Schneidring den Stutzen verlässt.

Die Rohrverschraubung dient vorzugsweise, wie nachstehend noch im Detail dargelegt wird, der Verbindung eines Rohrs mit weiteren Komponenten eines Rohrleitungssystems. Beispielsweise können zwei Rohre an ihren Rohrenden über die Rohrverschraubung miteinander verbunden werden.

Der Schneidring und das Gegenlager sind vorzugsweise zwei separate Bauteile. Es kann aber auch an Ausführungsformen gedacht sein, in denen Schneidring und Gegenlager als einstückiges Bauteil ausgeführt sind. Diese einstückige Ausführung von Schneidring und Gegenlager kann dauerhaft Bestand haben. Alternativ kann eine Sollbruchstelle zwischen Schneidring und Gegenlager vorgesehen sein, so dass beide während eines nachstehend noch beschriebenen Montage-Vorgangs gezielt voneinander getrennt werden.

Das Gegenlager übt während der Montage, d.h. während der Herstellung einer Verbindung zwischen einem Rohr und der Rohrverschraubung, vorzugsweise eine im Wesentlichen entlang einer Mittellängsachse des Schneidrings verlaufende Kraft auf diesen aus.

Das vorgenannte Rohr mit dem vorgenannten Rohrende ist nicht zwingender Bestandteil der vorliegenden Erfindung. Vielmehr dient die vorliegende Erfindung der Herstellung einer Verbindung zwischen einem Rohr und der Rohrverschraubung.

Die Rohrverschraubung ist derart beschaffen, dass das Gegenlager und der Schneidring auf das Rohr aufgeschoben werden. Dieses Aufschieben zu Beginn der Montage ermöglicht es, nach der Montage die nachstehend noch näher geschilderte Gebrauchslage zu erreichen.

Der Schneidring weist ein erstes Ende und ein zweites Ende auf. Das erste Ende ist in Gebrauchslage näher an einem Rohrende des Rohrs angeordnet, als das zweite Ende.

Im Inneren des Schneidrings sind zumindest zwei Schneidkanten angeordnet, wobei die erste Schneidkante näher am ersten Ende des Schneidrings angeordnet ist, als die zweite Schneidkante. Analoges gilt für etwaige weitere Schneidkanten. Umfasst der Schneidring beispielsweise eine dritte Schneidkante, so ist die zweite Schneidkante näher am ersten Ende angeordnet, als die dritte Schneidkante.

Wird im Rahmen der vorliegenden Erfindung von einem ersten oder zweiten Ende gesprochen, ohne diese Enden näher zu spezifizieren, so sind in aller Regel die jeweiligen Enden des Schneidrings gemeint.

Eine äussere Oberfläche des Schneidrings umfasst zumindest einen ersten Aussen-Konus und zumindest einen zweiten Aussen-Konus. Der erste Aussen-Konus ist näher am ersten Ende des Schneidrings angeordnet, als der zweite Aussen-Konus.

Vorzugsweise bildet eine nachstehend noch näher beschriebene Kontaktfläche des Schneidrings, welche sich während der Montage und in Betriebslage in Kontakt mit einer korrespondierenden Kontaktfläche des Gegenlagers befindet, zumindest einen Abschnitt des zweiten Endes des Schneidrings. Vorzugsweise bildet die erste Schneidkante zumindest einen Abschnitt des ersten Endes des Schneidrings. In den vorgenannten Fällen ist somit vorzugsweise kein Abschnitt des Schneidrings vorhanden, welcher sich zwischen dem ersten Ende des Schneidrings und der zuerst einschneidenden Schneidkante befindet.

In Gebrauchslage ist der erste Aussen-Konus näher am Rohrende angeordnet, als der zweite Aussen-Konus. Das Rohrende ist vorzugsweise derjenige endständige Teil des Rohrendabschnitts, welcher am tiefsten in den Stutzen eindringt und dort in Gebrauchslage beispielsweise an einem innerhalb des Stutzens vorhandenen Anschlag anliegt.

Der erste Aussen-Konus schliesst einen kleineren Winkel mit einer Mittellängsachse des Schneidrings ein, als der zweite Aussen-Konus.

Eine innere Oberfläche des Stutzens umfasst zumindest einen ersten Innen-Konus und einen zweiten Innen-Konus. Der erste Innen-Konus schliesst einen kleineren Winkel mit einer Mittellängsachse des Stutzens ein, als der zweite Innen-Konus.

Wird im Rahmen der vorliegenden Erfindung von einem Innen-Konus gesprochen, ohne diesen näher zu spezifizieren, so ist in aller Regel der jeweilige Innen-Konus des Stutzens gemeint. Wird im Rahmen der vorliegenden Erfindung von einem Aussen-Konus gesprochen, ohne diesen näher zu spezifizieren, so ist in aller Regel der jeweilige Aussen-Konus des Schneidrings gemeint.

Der erste Innen-Konus ist eingerichtet, in Gebrauchslage mit dem ersten Aussen-Konus in Wirkverbindung zu treten. Der zweite Innen-Konus ist eingerichtet, in Gebrauchslage mit dem zweiten Aussen-Konus in Wirkverbindung zu treten. Hierbei wird unter einer Gebrauchslage vorzugsweise ein Zustand verstanden, der nach einer ordnungsgemässen Montage der Rohrverschraubung vorliegt, wenn also ein Rohrendabschnitt eines Rohrs ordnungsgemäss mit der Rohrverschraubung verbunden wurde.

Vorzugsweise besteht zwischen den Innen- und Aussen-Konen in Gebrauchslage ein flächiger Kontakt. Eine Fläche, welche den ersten Innen-Konus bildet, kontaktiert in Gebrauchslage vorzugsweise flächig eine Fläche, welche den ersten Aussen-Konus bildet. Analoges gilt für die Flächen, welche die zweiten Innen- und Aussen-Konen bilden. Vor und während der Montage bestehen vorzugsweise zunächst Linien-Kontakte und im Längsschnitt PunktKontakte.

Die Gebrauchslage ist herstellbar, indem das Gegenlager den Schneidring, vorzugsweise entlang seiner Mittellängsachse, in den Stutzen hineinbewegt.

Vorzugsweise fallen die Mittellängsachsen des Schneidrings, des Stutzens und des Rohrs während der Montage und in Gebrauchslage zusammen.

Die Konen sind vorzugsweise derart bemessen und angeordnet, dass während der Herstellung der Gebrauchslage, d.h. während der Montage, zunächst die erste Schneidkante und anschliessend die zweite Schneidkante in eine Oberfläche des Rohrendabschnitts einschneidet. Analoges gilt vorzugsweise für etwaig vorhandene weitere Schneidkanten. Umfasst der Schneidring zum Beispiel drei Schneidkanten, und soll auch die dritte Schneidkante in die Oberfläche des Rohrendabschnitts einschneiden, so schneidet die dritte Schneidkante vorzugsweise nach der zweiten Schneidkante in die Oberfläche des Rohrendabschnitts ein.

Indem die nahe am ersten Ende des Schneidrings angeordnete erste Schneidkante zuerst, d.h. vor der zweiten und etwaigen weiteren Schneidkanten in die Oberfläche einschneidet, wird sichergestellt, dass der Schneidring anschliessend komprimiert und verformt oder verbogen wird, wenn das Gegenlager weiterhin am zweiten Ende des Schneidrings eine Kraft auf diesen ausübt.

Vorzugsweise berühren sich die ersten Konen, d.h. der erste Innen-Konus und der erste Aussen-Konus, während der Montage zuerst. Vorzugsweise kommt es hierbei zuerst zu einem Punkt- bzw. Linien-Kontakt und einem Entlanggleiten des ersten Aussen-Konus am ersten Innen-Konus, bis ein flächiger Kontakt der vorgenannten Konen ausgebildet wurde. Vorzugsweise berühren sich die zweiten Konen, d.h. der zweite Innen-Konus und der zweite Aussen-Konus, erst nach der Herstellung des vorgenannten flächigen Kontakts der ersten Konen. Der flächige Kontakt zwischen den zweiten Konen wird dann vorzugsweise erreicht, indem der Winkel zwischen dem zweiten Aussen-Konus und der Mittellängsachse des Schneidrings durch Verformen oder Verbiegen des Schneidrings vergrössert wird. Auch bei der Herstellung des flächigen Kontakts zwischen den ersten Konen wird der Winkel zwischen dem ersten Aussen-Konus und der Mittellängsachse des Schneidrings vorzugsweise durch Verbiegen des Schneidrings vergrössert, was die Herstellung des vorgenannten flächigen Kontakts zumindest unterstützt. Insbesondere das Einarbeiten der Schneidkanten in die Oberfläche des Rohrendabschnitts kann in Verbindung mit einer Verbiegung des Schneidrings die Herstellung der flächigen Kontakte zwischen den Innen- und Aussen-Konen ermöglichen und/oder bewirken.

Die zuerst in die Oberfläche einschneidende Schneidkante wirkt wie ein Anker und verhindert oder erschwert eine translatorische Bewegung des Schneidrings entlang der Mittellängsachsen von Schneidring und Stutzen. Nach dem Einschneiden der zuerst in die Oberfläche einschneidenden Schneidkante wird der Schneidring zwischen dieser Schneidkante und seinem zweiten Ende gestaucht und verformt. Der Abschnitt zwischen dem ersten Ende des Schneidrings und der zuerst einschneidenden Schneidkante, falls ein solcher Abschnitt vorhanden ist, erfährt nach diesem Einschneiden hingegen kaum Kräfte und Verformungen. Ist die zuerst einschneidende Schneidkante, wie dies etwa bei der Rohrverbindung gemäss der AT 270316 B der Fall ist, nicht diejenige Schneidkante, welche dem ersten Ende des Schneidrings am nächsten ist, so werden die Schneidkanten zwischen dem ersten Ende des Schneidrings und der zuerst einschneidenden Schneidkante nicht mit ausreichender Kraft beaufschlagt, um sich ausreichend tief in die Oberfläche des Rohrs einzuarbeiten.

Der Schneidring kann genau zwei Schneidkanten umfassen. Der Schneidring kann auch genau drei oder mehr als drei Schneidkanten umfassen. Die Anzahl der Aussen-Konen des Schneidrings muss nicht mit der Anzahl der Schneidkanten korrelieren. Allerdings sind jeweils zumindest zwei Aussen-Konen und zumindest zwei Schneidkanten vorhanden. Varianten des Schneidrings mit genau zwei Aussen-Konen und zwei oder drei Schneidkanten sind bevorzugt.

Nachstehend werden optionale Details und weitere Ausführungsformen beschrieben, die ausgehend von der vorstehend beschriebenen Ausführungsform angedacht sein können.

Der Stutzen kann ein Innengewinde aufweisen, welches mit einem Aussengewinde des Gegenlagers korrespondiert. Das Gegenlager ist vorzugsweise eine Hohlschraube. Wenn im Rahmen der vorliegenden Erfindung von einem Gegenlager die Rede ist, so kann stets vorzugsweise an eine Hohlschraube gedacht sein. Vorzugsweise ist also angedacht, dass die Hohlschraube oder im Allgemeinen das Gegenlager in den Stutzen eingeschraubt wird und dabei den Schneidring in den Stutzen hineindrückt, so dass sich die Schneidkanten des Schneidrings, beginnend mit der ersten Schneidkante, in die Oberfläche des im Stutzen befindlichen Rohrendabschnitts einarbeiten. Umfasst der Schneidring mehr als zwei Schneidkanten, so arbeiten sich vorzugsweise zumindest die erste und die zweite Schneidkante nacheinander in den Rohrendabschnitt ein. Gleichzeitig kommen während diesem Einschrauben des Gegenlagers vorzugsweise die Innen- und Aussen-Konen flächig miteinander in Kontakt, was nachstehend noch näher beschrieben ist. Vorzugsweise unterstützt oder bewirkt die Ausgestaltung der Innen- und Aussen-Konen, dass sich die Schneidkanten in der gewünschten Reihenfolge, beginnend mit der ersten Schneidkante, in den Rohrendabschnitt einarbeiten.

Die Rohrverschraubung kann den Stutzen, den Schneidring und das Gegenlager als separat gefertigte Bauteile umfassen oder aus diesen Bauteilen bestehen. Die Rohrverschraubung kann somit ein System umfassend zumindest drei Teile oder genau drei Teile sein.

Der Winkel zwischen dem ersten Innen-Konus und der Mittellängsachse des Stutzens kann grösser sein, als der Winkel zwischen dem ersten Aussen-Konus und der Mittellängsachse des Schneidrings. Der Winkel zwischen dem zweiten Innen-Konus und der Mittellängsachse des Stutzens kann grösser sein, als der Winkel zwischen dem zweiten Aussen-Konus und der Mittellängsachse des Schneidrings. Durch die vorstehend beschriebenen Grössenverhältnisse der Winkel wird erreicht, dass während der Montage zunächst ein Punktkontakt bzw. Linienkontakt zwischen den ersten Konen auftritt, der während des Einschneidens der ersten Schneidkante in einen Flächenkontakt übergeht. Anschliessend entsteht ein Punkt- bzw. Linienkontakt zwischen den zweiten Konen, der spätestens beim Erreichen der Gebrauchslage in einen Flächenkontakt übergeht. Üblicherweise entstehend während der vorbeschriebenen Montage Linienkontakte, welche sich in einer Schnittansicht als Punktkontakte darstellen. Es ist aber auch denkbar, dass beispielsweise zunächst Punkt- und anschliessend Linien-Kontakte zwischen den Innen- und Aussen-Konen bestehen, die dann in Flächenkontakte übergehen.

Der Winkel zwischen dem ersten Aussen-Konus und der Mittellängsachse des Schneidrings kann zwischen 10° und 24°, vorzugsweise zwischen 13° und 21°, weiter bevorzugt zwischen 15° und 19° betragen. Der vorgenannte Winkel kann etwa oder genau 17° betragen.

Der Winkel zwischen dem zweiten Aussen-Konus und der Mittellängsachse des Schneidrings kann zwischen 20° und 35°, vorzugsweise zwischen 22° und 32°, weiter bevorzugt zwischen 24° und 29°, weiter bevorzugt zwischen 25° und 27° betragen. Der vorgenannte Winkel kann etwa oder genau 26° betragen. Hierbei ist der Winkel zwischen dem zweiten Aussen-Konus und der Mittellängsachse des Schneidrings vorzugsweise grösser, als der Winkel zwischen dem ersten Aussen-Konus und der Mittellängsachse des Schneidrings.

Der Winkel zwischen dem zweiten Aussen-Konus und der Mittellängsachse des Schneidrings kann zwischen 2° und 15° grösser sein, als der Winkel zwischen dem ersten Aussen-Konus und der Mittellängsachse des Schneidrings. Es kann auch daran gedacht sein, dass der erstgenannte Winkel zwischen 4° und 12° oder zwischen 6° und 11° und weiter bevorzugt zwischen 8° und 10° und besonders bevorzugt etwa oder genau 9° grösser ist als der zweitgenannte Winkel.

Der Winkel zwischen dem ersten Innen-Konus und der Mittellängsachse des Stutzens kann zwischen 17° und 31° betragen. Dieser Winkel kann bevorzugt zwischen 20° und 28° oder zwischen 22° und 26° betragen. Der Winkel zwischen dem ersten Innen-Konus und der Mittellängsachse des Stutzens kann weiter bevorzugt im Wesentlichen oder genau 24° betragen.

Der Winkel zwischen dem zweiten Innen-Konus und der Mittellängsachse des Stutzens kann 28° und 43° betragen. Dieser Winkel kann bevorzugt zwischen 29° und 439 oder zwischen 31° und 34° betragen. Der Winkel zwischen dem zweiten Innen-Konus und der Mittellängsachse des Stutzens kann weiter bevorzugt im Wesentlichen oder genau 32,5° betragen. Hierbei ist der Winkel zwischen dem zweiten Innen-Konus und der Mittellängsachse des Stutzens vorzugsweise grösser als der Winkel zwischen dem ersten Innen-Konus und der Mittellängsachse des Stutzens.

Der Winkel zwischen dem ersten Innen-Konus und der Mittellängsachse des Stutzens kann zwischen 3° und 11°, vorzugsweise zwischen 5° und 9°, besonders bevorzugt zwischen 6° und 8° und weiter bevorzugt etwa oder genau 7° grösser sein, als der Winkel zwischen dem ersten Aussen-Konus und der Mittellängsachse des Schneidrings.

Der Winkel zwischen dem zweiten Innen-Konus und der Mittellängsachse des Stutzens kann zwischen 4° und 12°, vorzugsweise zwischen 5° und 10°, besonders bevorzugt zwischen 6° und 8° und weiter bevorzugt etwa oder genau 6,5° grösser sein, als der Winkel zwischen dem zweiten Aussen-Konus und der Mittellängsachse des Schneidrings.

Es kann daran gedacht sein, dass nur genau ein einziges Bauteil der Rohrverschraubung in Gebrauchslage in das Rohr einschneidet, wobei dieses Bauteil der Schneidring ist. Indem genau ein einziges einstückiges Bauteil für das Einschneiden in das Rohr "zuständig" ist, kann die Rohrverschraubung einfach und robust ausgeführt sein. Sie ist nicht auf eine grosse Vielzahl von Teilen angewiesen, und kann einfach hergestellt werden. Ferner ist eine solche Rohrverschraubung im Gebrauch sehr zuverlässig.

Es kann daran gedacht sein, dass Kontaktflächen des Schneidrings und des Gegenlagers eine Neigung zu Mittellängsachsen der vorgenannten Bauteile zwischen 81° und 89°, vorzugsweise zwischen 83° und 87°, weiter bevorzugt eine Neigung zwischen 84° und 86°, besonders bevorzugt von etwa 85° aufweisen. Durch die vorgenannte Neigung wird der Schneidring einerseits während der Montage mit einer Kraft beaufschlagt, die zu einem überwiegenden Teil entlang der Mittellängsachsen der beteiligten Bauteile wirkt. Andererseits bewirkt die leichte Neigung, dass der Schneidring während der Montage zu einem gewissen Umfang feder-artig aufgebogen wird, was die sich positiv auf die Montage und den Halt der Verbindung zwischen Rohrverschraubung und Rohr auswirkt. Beispielsweise kann das vorbeschriebene Aufbiegen die Ausrichtung der Schneidkanten im Hinblick auf das Einschneiden unterstützen.

Der Stutzen kann eine Einrichtung zur Anbindung an weitere Komponenten eines Rohrleitungssystems umfassen. Vorzugsweise bildet ein Teil des Stutzens die vorgenannte Einrichtung.

Die weitere Komponente kann ein zweiter Rohrendabschnitt sein, so dass über den Stutzen zwei Rohre über ihre Endabschnitte miteinander verbunden werden können. Ein solcher Stutzen ist vorzugsweise symmetrisch ausgebildet.

Der erste Aussen-Konus kann der ersten Schneidkante zugeordnet sein, und dass der zweite Aussen-Konus kann der zweiten Schneidkante zugeordnet sein.

Diese Zuordnung kann erreicht werden, indem die vorgenannten Konen und Bauteile in Bezug auf die Mittellängsachsen zumindest im Wesentlichen auf zumindest ähnlicher Höhe vorgesehen sind. Jedenfalls bedeutet diese Zuordnung vorzugsweise stets, dass die Reihenfolge der Schneidkanten und Konen zwischen dem ersten Ende des Schneidrings und dem zweiten Ende des Schneidrings korrespondieren. Ausgehend vom ersten Ende folgen somit in Richtung auf das zweite Ende zunächst die erste Schneidkante und der erste Aussen-Konus und anschliessend die zweite Schneidkante und der zweite Aussen-Konus.

Die Innen-Konen können in Gebrauchslage unmittelbar mit den Aussen-Konen in Wirkverbindung treten. Die Übertragung von Kräften und die Kontaktierung zwischen Innen- und Aussen-Konen erfolgt somit vorzugsweise durch direkte Berührung der Flächen der jeweiligen Konen, und wird nicht über zwischengeschaltete Bauteile vermittelt.

Die in Gebrauchslage bestehende Wirkverbindung der Konen wird vorzugsweise durch flächigen Kontakt der genannten Konen bewirkt.

Der Stutzen, der Schneidring und die Hohlschraube können jeweils aus hochlegiertem nichtrostendem Stahl gefertigt sein. Beispielsweise kann hierbei an Stähle gedacht sein, die unter den folgenden Werkstoffbezeichnungen bekannt sind: 1.4404; 1.4401; 1.4301; 1.4571; 1.4435; 1.4542; 1.4462; 1.4501. Hierbei können für Stutzen, Schneidring und Hohlschraube jeweils einer vorgenannten Werkstoffe zum Einsatz kommen. Die drei Bauteile müssen nicht zwingend aus demselben Werkstoff gefertigt sein.

Eine äussere Schicht des Schneidrings kann gehärtet sein. Hierbei kommt eine Oberflächenhärtung, insbesondere eine Randschichthärtung in Betracht.

Die Gewinde von Stutzen und Gegenlager, z.B. von Stutzen und Hohlschraube, können beschichtet sein. Hierbei kann ein Festschmierstoff zum Einsatz kommen. Beispielsweise können PTFE oder MoS2 zum Einsatz kommen.

Das Rohr, mit dem die Rohrverschraubung gemäss der vorliegenden Erfindung verwendet wird, kann aus denselben Werkstoffen gefertigt sein, wie Stutzen, Schneidring und Hohlschraube..

Nachstehend werden eine Verwendung der vorstehend beschriebenen Rohrverschraubung sowie ein Verfahren zur Herstellung einer Verbindung zwischen einem Rohr und einer solchen Rohrverschraubung beschrieben. Merkmale und Details, welche vorstehend in Bezug auf die Rohrverschraubung beschrieben wurden, gelten auch für die Verwendung und das Verfahren. Merkmale und Details, welche nachstehend in Bezug auf die Verwendung und das Verfahren beschrieben sind, gelten auch für die vorstehend beschriebene Rohrverschraubung.

Die vorliegende Erfindung umfasst ferner eine **Verwendung** zumindest einer Ausführungsvariante der vorstehend beschriebenen Rohrverschraubung zur Herstellung einer Verbindung zwischen einem Rohr, vorzugsweise zwischen einem Rohrendabschnitt eines Rohrs, und der Rohrverschraubung. Die Verwendung umfasst ferner zusätzlich die Herstellung einer Verbindung zwischen dem Stutzen und einer weiteren Komponente eines Rohrleitungssystems, beispielsweise zwischen dem Stutzen und einem zweiten Rohr.

Die Rohrverschraubung kann vorzugsweise zur Durchleitung von Fluiden mit einem Druck von bis zu 4000 bar verwendet werden. Oberhalb von 4000 bar dürfte die Gefahr eines Berstens der Rohrverschraubung bestehen. Bevorzugt wird die Rohrverschraubung zur Durchleitung von Fluiden mit einem Druck von 600 bar bis 4000 bar, weiter bevorzugt mit einem Druck von 600 bar bis 2650 bar verwendet.

Die vorliegende Erfindung umfasst ferner ein **Verfahren** zur Herstellung einer Verbindung zwischen einem Rohr und zumindest einer Ausführungsform der vorstehend beschriebenen Rohrverschraubung. Das Verfahren umfasst die folgenden Schritte:
- Bereitstellen eines Rohrs sowie einer Ausführungsform der vorstehend beschriebenen Rohrverschraubung,
- Aufschieben des Gegenlagers und des Schneidrings auf einen Rohrendabschnitt des Rohrs,
- Einbringen des Rohrendabschnitts und des Schneidrings in den Stutzen,
- Beaufschlagung des Schneidrings mit einer im Wesentlichen entlang der Mittellängsachsen wirkenden Kraft durch das Gegenlager, um den Schneidring in den Stutzen zu pressen.

Vorzugsweise wird zunächst das Gegenlager und anschliessend der Schneidring auf den Rohrendabschnitt des Rohrs aufgeschoben.

Vorzugsweise erfolgt die Beaufschlagung des Schneidrings mit der Kraft durch das Gegenlager über die Kontaktflächen von Schneidring und Gegenlager, vorzugsweise von Schneidring und Hohlschraube. Wie bereits in Bezug auf die Rohrverschraubung beschrieben, sind diese Kontaktflächen vorzugsweise um 85° zu den Mittellängsachsen der vorgenannten Bauteile geneigt.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine geschnittene Explosionsdarstellung einer Rohrverschraubung 1 mit teilweise dargestelltem Stutzen 5;
Figur 2 eine Schnittdarstellung einer Rohrverschraubung während der Montage, d.h. während der Herstellung einer Verbindung zwischen einem Rohr 15 und der Rohrverschraubung 1;
Figur 3 einen Teil des Stutzens 5 in Schnittansicht;
Figur 4 einen Teil der Rohrverschraubung 1 nach Figur 2 unmittelbar einem Festdrehen einer Hohlschraube 4;
Figuren 5 und 6 zwei Varianten eines Schneidrings 3, 3a in Schnittdarstellung;
Figuren 7 bis 10 die Montage der Rohrverschraubung 1 in Schnittdarstellung;
Figuren 11 bis 14 Detailansichten nach den Figuren 7 bis 10;
Figur 15 den Schneidring 3 in Schnittdarstellung mit weiteren Details;
Figur 16 eine Detailansicht des Stutzens 5 in Schnittdarstellung,
Figur 17 eine perspektivische Explosionsdarstellung einer Rohrverschraubung 1, sowie
Figur 18 eine geschnittene Ansicht nach Figur 17.

Alle Figuren sind schematisch. Die gezeigten Bauteile sind weder zwingend massstäblich noch stets zueinander proportional dargestellt.

Der besseren Übersicht halber sind nicht in sämtlichen Figuren alle Bestandteile und Merkmale mit Bezugsziffern versehen.

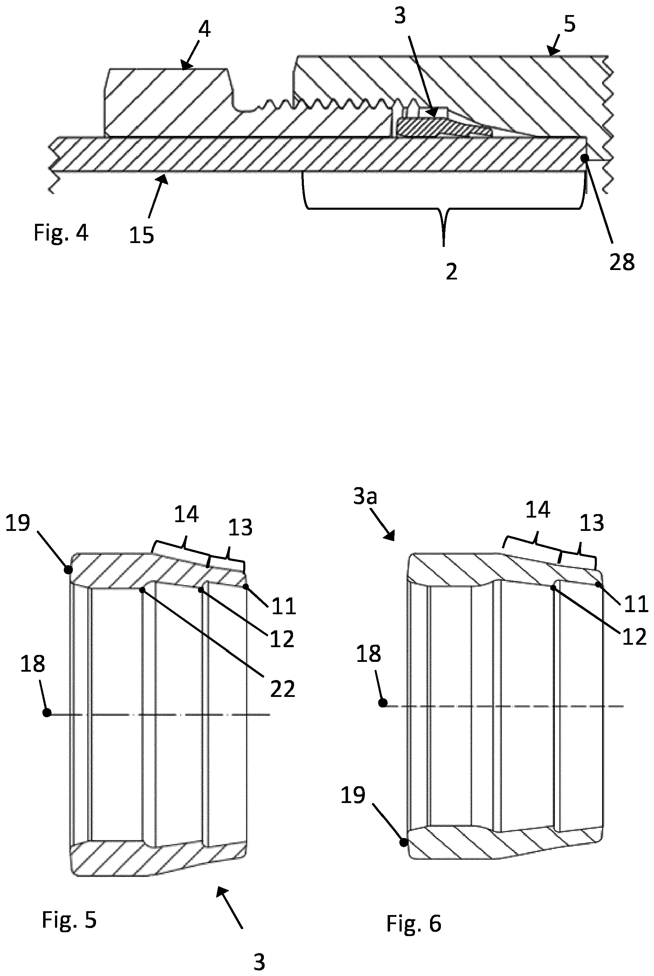

Bis auf die Figur 6 zeigen alle Figuren dieselbe Rohrverschraubung 1 umfassend dieselben Bauteile in im Wesentlichen derselben Orientierung. Etwaige Bezugsziffern, die in einigen Figuren der besseren Übersicht halber ausgelassen wurden, können also unter Zuhilfenahme der anderen Figuren ergänzt werden.

### Ausführungsbeispiel

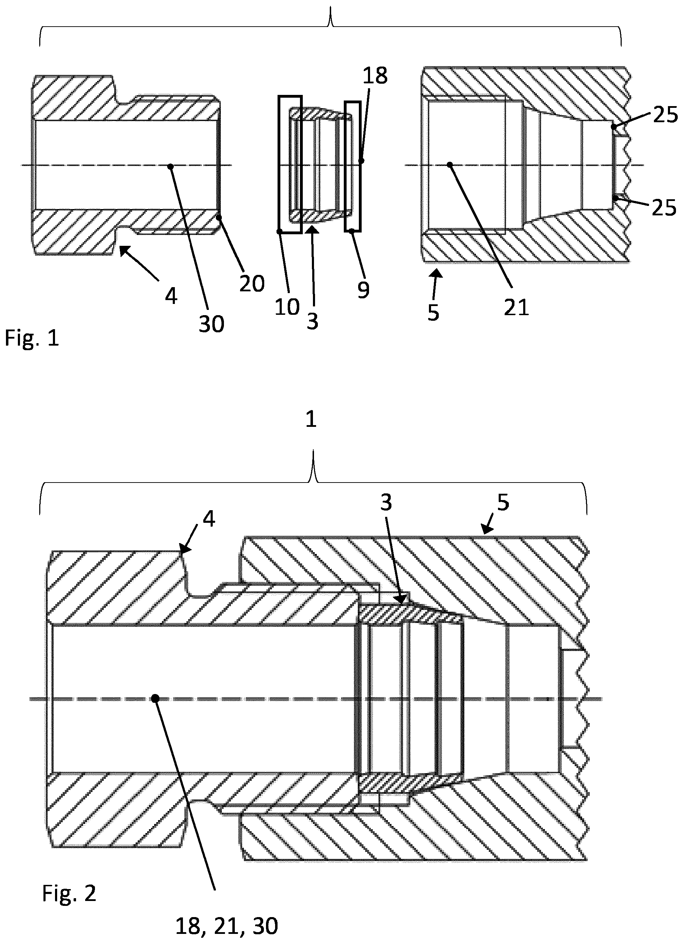

In Figur 1 sind ein Schneidring 3, eine Hohlschraube 4 und ausschnittsweise ein Stutzen 5 als wesentliche Bestandteile der Rohrverschraubung 1 dargestellt. Weiterhin sind ein Anschlag 5, ein erstes Ende 9 und ein zweites Ende 10 des Schneidrings 3, eine Mittellängsachse 21 des Stutzens 5, eine Mittellängsachse 18 des Schneidrings 3, eine Mittellängsachse 30 der Hohlschraube 4, ein Anschlag 25 sowie eine Kontaktfläche 20 der Hohlschraube 4 erkennbar.

Figur 2 zeigt die Bestandteile der Rohrverschraubung 1 gemäss Figur 1 während der Montage. Ein Rohr 15 ist hierbei der besseren Übersicht halber nicht dargestellt.

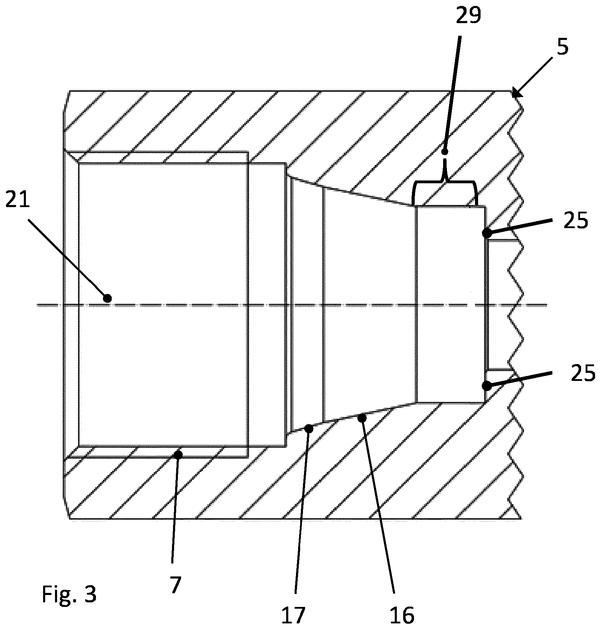

Figur 3 zeigt eine Detail-Ansicht des Stutzens 5 mit seiner Mittellängsachse 21, einem ersten Innen-Konus 16 und einem zweiten Innen-Konus 17 sowie einem Innengewinde 7. Ausserdem ist ein Rohrführungs-Abschnitt 29 zu sehen, an dessen Ende sich der Anschlag 25 befindet.

Figur 4 zeigt einen Teil der Rohrverschraubung 1 nach Figur 2 unmittelbar vor einem Festdrehen der Hohlschraube 4. Hierbei ist ein Teil eines Rohrs 15 mit einem Rohrendabschnitt 2 und einem Rohrende 28 erkennbar. Ferner sind die Lage der Hohlschraube 4 und des Schneidrings 3 unmittelbar vor dem Festdrehen erkennbar.

Figuren 5 zeigt den Schneidring 3. Hierbei sind dessen Mittellängsachse 18, ein erster Aussen-Konus 13 und ein zweiter Aussen-Konus 14 sowie eine erste, eine zweite und eine dritte Schneidkante 11, 12, 22 erkennbar. Ausserdem ist eine Kontaktfläche 19 erkennbar.

Figur 6 zeigt eine Variante eines Schneidrings 3a mit nur zwei Schneidkanten 11, 12. Im Übrigen gleicht der Schneidring 3a nach Figur 6 dem Schneidring 3 nach Figur 5.

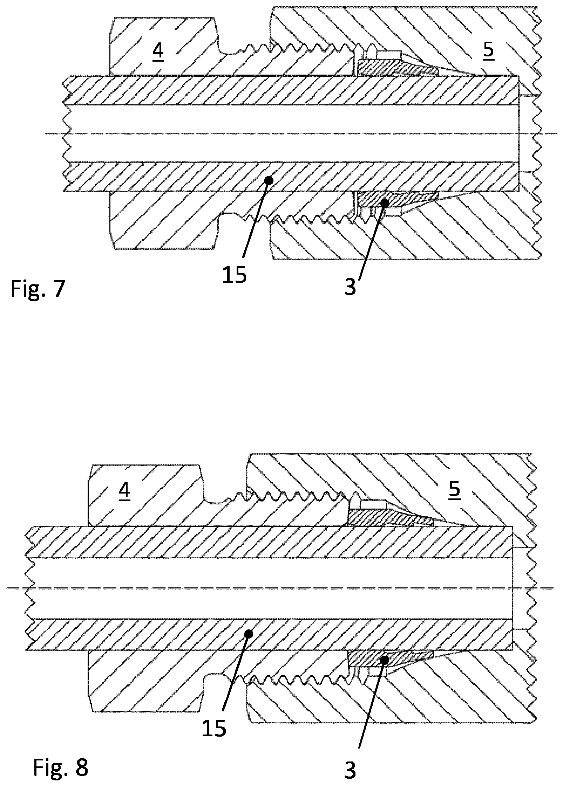

Figur 7 zeigt eine Ansicht der Rohrverschraubung 1 nach Figur 4. Hierbei sind das Rohr 15, der Schneidring 3, der Stutzen 5 und die Hohlschraube 4 gekennzeichnet. Alle übrigen Details und Bestandteile der Rohrverschraubung 1, die u.a. in Figur 4 mit Bezugsziffern versehen sind, wurden der besseren Übersicht halber in Figur 7 nicht mit Bezugsziffern versehen. Figur 7 zeigt die Rohrverschraubung 1 zu Beginn der Montage.

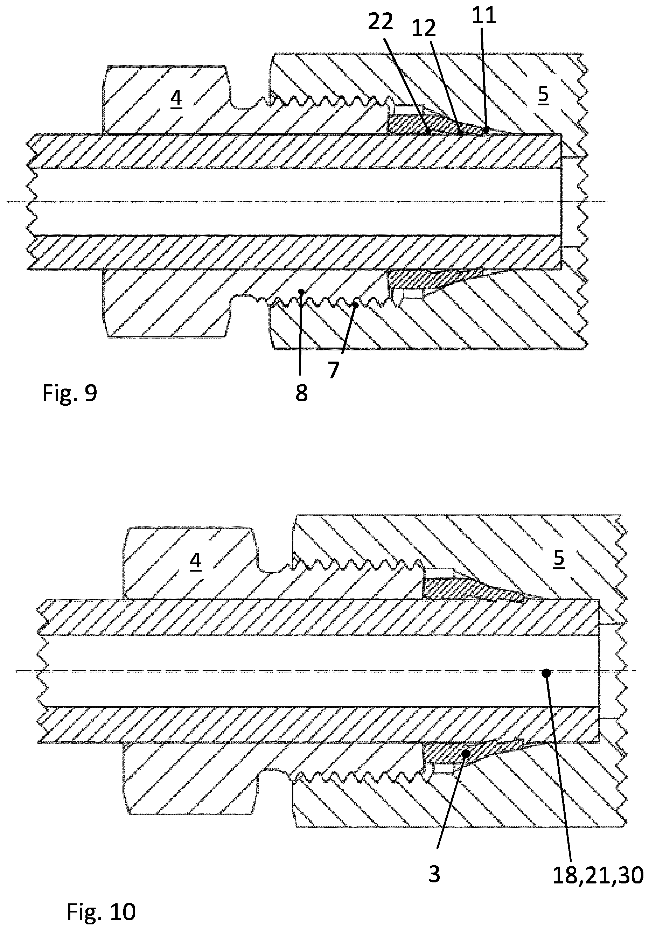

Figur 8 und Figur 9 zeigen die Rohrverschraubung 1 nach Figur 7 während der Montage.

Figur 10 zeigt die Rohrverschraubung 1 gemäss den Figuren 7 und 8 nach Abschluss der Montage, d.h. in Gebrauchslage. Hierbei sind die Mittellängsachsen 18, 21, 30 aller Bauteile 3, 4, 5 gezeigt, die in der Gebrauchslage nach Figur 10, wie auch zuvor während den Montageschritten gemäss den Figuren 7 bis 9, zusammenfallen. Dasselbe gilt für eine nicht mit Bezugsziffer versehene Mittellängsachse des Rohrs 15.

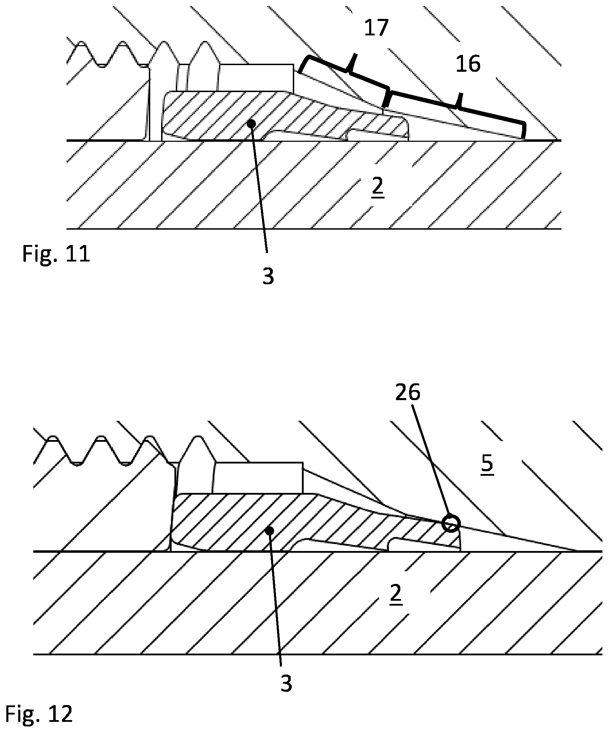

Figur 11 zeigt eine Detailansicht nach Figur 7.

Figur 12 zeigt eine Detailansicht nach Figur 8.

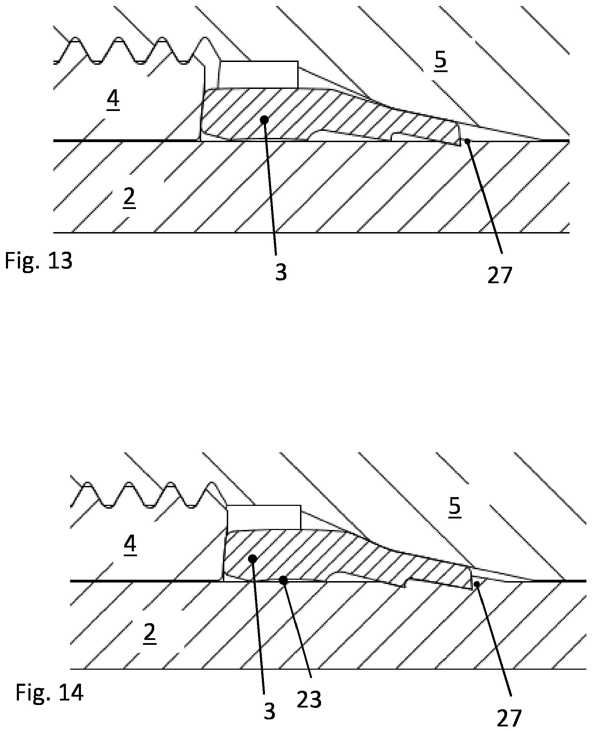

Figur 13 zeigt eine Detailansicht nach Figur 9.

Figur 14 zeigt eine Detailansicht nach Figur 10.

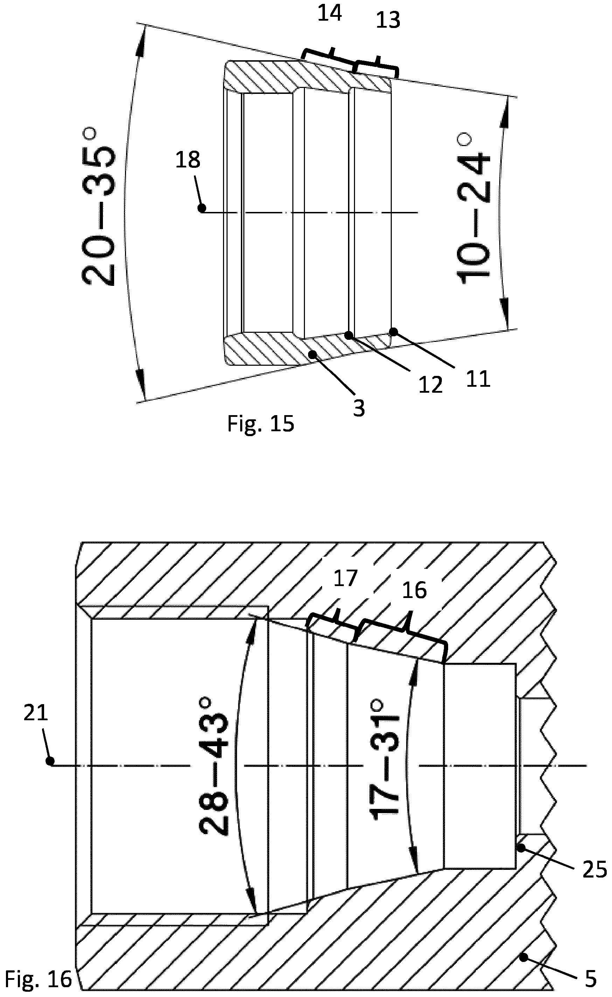

Figur 15 zeigt die Winkel der Aussen-Konen 13, 14 zur Mittellängsachse 18 des Schneidrings 3.

Figur 16 zeigt die Winkel der Innen-Konen 16, 17 zur Mittellängsachse 21 des Stutzens 5.

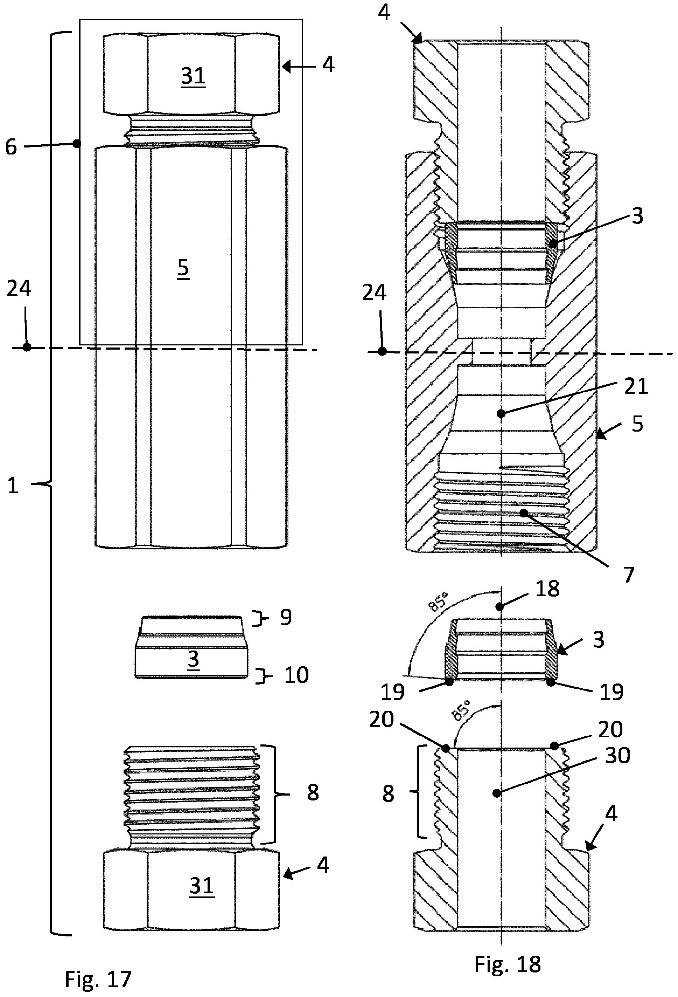

Figur 17 zeigt eine Explosionsdarstellung der Rohrverschraubung 1, wobei eine Symmetrie-Achse 24 eingezeichnet ist. Im Gegensatz zu den Figuren 1, 2, 3, 4, 7 bis 10 und 16 ist in Figur 17 auch der rechte Teil des Stutzens 5 dargestellt. Dieser rechte Teil ist ausgebildet, einen Schneidring 3 und eine Hohlschraube 4 aufzunehmen, wie dies in den vorangehenden Figuren für den linken Teil des Stutzens 5 gezeigt wurde. Ferner ist ein Aussensechskant 31 der Hohlschraube 4 dargestellt, über den diese mit einem geeigneten Werkzeug in das Innengewinde 7 eingeschraubt werden kann.

Figur 18 zeigt eine Schnittansicht nach Figur 17. Unter anderem sind die Mittellängsachsen 18, 21, 30 der drei Bauteile 3, 5, 4 zu erkennen. Weiterhin ist der Figur 18 entnehmbar, dass die Kontaktflächen 19, 20 jeweils einen Winkel von 85° mit den Mittellängsachsen 18, 30 einschliessen.

### Bezugnehmend auf die Figuren 1 bis 18 erklären sich die Funktionsweise der erfindungsgemässen Rohrverschraubung 1 sowie das erfindungsgemässe Verfahren folgendermassen:

Die Hohlschraube 4 und der Schneidring 3 werden auf den Rohrendabschnitt 2 des Rohrs 15 aufgeschoben. Anschliessend wird der Rohrendabschnitt 2 mit dem darauf befindlichen Schneidring 3 in den Stutzen 5 eingeschoben, bis das Rohrende 28 in den Rohrführungs-Abschnitt 29 gelangt. Danach kann das Aussengewinde 8 der Hohlschraube 4 mit dem Innengewinde 7 des Stutzens 5 verschraubt werden. In Gebrauchslage liegt das Rohrende 28 vorzugsweise an dem Anschlag 25 an.

Zunächst berührt die Kontaktfläche 20 der Hohlschraube 4 hierbei die Kontaktfläche 19 des Schneidrings 3 noch nicht, was in den Figuren 4, 7 und 11 dargestellt ist.

Wird, ausgehend von der Lage gemäss den Figuren 7 und 11, das Aussengewinde 8 der Hohlschraube 4 ein Stück weiter eingedreht, so berühren sich die Kontaktflächen 19, 20, und es kommt zu einem ersten Linienkontakt 26 zwischen dem Schneidring 3 und dem ersten Innen-Konus 16. Dieser Linienkontakt 26 ist in der Schnittdarstellung nach Figur 12 als Punkt-Kontakt zu erkennen und durch einen Kreis angedeutet.

Wird die Hohlschraube 4 weiter eingedreht, so gleitet ein aussen am ersten Ende 9 des Schneidrings 3 befindlicher Abschnitt desselben entlang des ersten Innen-Konus 16. Hierbei verbiegt sich dieses erste Ende 9 zum Rohrendabschnitt 2 hin, so dass die erste Schneidkante 11 in das Rohr 15 einschneidet. Hierbei bildet sich eine Wulst 27, welcher eine weitere Bewegung des Schneidrings 3 entlang des Rohrendabschnitts 2, d.h. in den Figuren 7 bis 14 nach rechts, bremst und erschwert. Wie in den Figuren 9 und 13 zu erkennen ist, berühren sich in dieser Situation die zweiten Konen 14, 17 noch nicht. Die zweite Schneidkante 12 schneidet auch noch nicht in den Rohrendabschnitt 2 ein. Auch die dritte Schneidkante 22 schneidet oder bremst noch nicht durch entsprechenden Kontakt mit dem Rohrendabschnitt 2. Die ersten Konen 13, 16 liegen jedoch flächig aufeinander.

Wird ausgehend von der Situation gemäss den Figuren 9 und 13 die Hohlschraube 4 weiter in das Innengewinde 7 eingedreht, so wird der Schneidring 3 weiter verbogen, bis die in den Figuren 10 und 14 gezeigte Position erreicht ist. Hierbei liegen sowohl die ersten Konen 13, 16 als auch die zweiten Konen 14, 17 flächig einander auf. Die zweite Schneidkante 12 hat sich in den Rohrendabschnitt 2 eingearbeitet. Ferner hat sich durch ein federartiges Aufbiegen ein aufgebogener Abschnitt 23 gebildet. Die dritte Schneidkante 22 liegt auf dem Rohrendabschnitt 2 auf, was ebenfalls dazu beiträgt, das Rohr 15 in Position zu halten. In dieser Position ist der Rohrendabschnitt 2 und somit das gesamt Rohr 15 sicher in der Rohrverschraubung 1 befestigt.

Aus den vorstehenden Ausführungen geht hervor, dass der Stutzen 5 zur Aufnahme und Lagerung des Rohrendabschnitts 2 und des Schneidrings 3 sowie zur teilweisen Aufnahme der Hohlschraube 4, deren Aussengewinde 8 sich in der Betriebslage nach beispielsweise Figur 10 im Stutzen befindet, eingerichtet ist.

Der erste Aussen-Konus 13 schliesst mit der Mittellängsachse 18 des Schneidrings 3 einen kleineren Winkel ein, als der zweite Aussen-Konus 14. In Figur 15 sind bevorzugte Bereiche der vorgenannten Winkel dargestellt.

Der erste Innen-Konus 16 schliesst mit der Mittellängsachse 21 des Stutzens 5 einen kleineren Winkel ein, als der zweite Innen-Konus 17. In Figur 16 sind bevorzugte Bereiche der vorgenannten Winkel dargestellt.

Wie beispielsweise aus Figur 14 hervorgeht, treten die Innen-Konen 16, 17 in Gebrauchslage unmittelbar mit den Aussen-Konen 13, 14 in Wirkverbindung, ohne dass es hierfür weiterer vermittelnder Bauteile zur Kontaktierung und/oder Kraftübertragung zwischen den vorgenannten Konen 13, 14, 16, 17 bedarf.

Wie bereits erwähnt und auch in den Figuren 11 bis 14 erkennbar, ohne dass die Winkel dort eingezeichnet sind, sind die Kontaktflächen 19, 20 vorzugsweise etwa 85° zu den Mittellängsachsen 18, 21 geneigt. Daher verläuft die Kraft, welche die Hohlschraube 4 auf den Schneidring 3 überträgt, zwar im Wesentlichen, aber nicht vollständig, parallel zu den Mittellängsachsen 18, 21. Die Komponente dieser Kraft, die nicht parallel zu den Mittellängsachsen 18, 21 verläuft, unterstützt das in den Figuren 13 und 14 erkennbare Aufbiegen des Schneidrings 3, so dass der aufgebogene Abschnitt 23 entsteht.

Aus den Figuren geht hervor, dass die Mittellängsachsen 18, 21, 30 Rotationssymmetrie-Achsen der jeweiligen Bauteile 3, 5, 4 sind.

Insbesondere aus den Figuren 11 bis 14 geht hervor, dass die Konen 13, 14, 16, 17 derart bemessen und angeordnet sind, dass während der Herstellung der Gebrauchslage, d.h. während der Montage, zunächst die erste Schneidkante 11 und anschliessend die zweite Schneidkante 12 in eine Oberfläche des Rohrendabschnitts 2 einschneidet. Nach dem in Figur 13 gezeigten Einschneiden der ersten Schneidkante 11 bildet sich die Wulst 27, die zusammen mit der ersten Schneidkante 11 hemmend in der Art eines Ankers eine weitere Bewegung des Schneidrings 3 entlang der Mittellängsachsen 18, 21, in Figur 13 also nach rechts, erschwert oder verhindert. Aus dem Vergleich der Figuren 13 und 14 geht hervor, dass eine weitere Bewegung der Hohlschraube 4 nach rechts deshalb bewirkt, dass der Schneidring 3 verformt wird, sich also der aufgebogene Abschnitt 23 bildet, die erste Schneidkante 11 noch tiefer in die Oberfläche des Rohrendabschnitts 2 eingedrückt und die Wulst 27 vergrössert wird. Insbesondere arbeitet sich aber die zweite Schneidkante 12 erst nach dem Einschneiden der ersten Schneidkante 11 ebenfalls in die Oberfläche des Rohrendabschnitts 2 ein.

Würde sich, wie dies bei der Rohrverbindung gemäss der AT 270316 B der Fall ist, zuerst die zweite Schneidkante 12 in die Oberfläche einarbeiten, so würde diese als Anker wirken. Die Beaufschlagung des Schneidrings 3 mit einer Kraft durch die Hohlschraube 4 würde dann zwar die zweite Schneidkante 12 tiefer in die Oberfläche hineindrücken, aber die erste Schneidkante 11 könnte sich nur unzureichend in die Oberfläche eingraben. Nach dem Einschneiden der zweiten Schneidkante 12 könnte eine weitere Kraftbeaufschlagung des Schneidrings 3 durch die Hohlschraube 4 nämlich nicht mehr in der gewünschten Weise auf den Abschnitt zwischen der zweiten Schneidkante 12 und dem ersten Ende 9 des Schneidrings 3 übertragen werden. Deshalb wäre, wenn die zweite Schneidkante 12 zuerst einschneiden würde, danach das erfolgreiche Einschneiden der ersten Schneidkante 11 nicht mehr gewährleistet.

Aus den Figuren 11 bis 14 in Verbindung mit den Figuren 15 und 16 geht hervor, dass die ersten Konen 13, 16 und die zweiten Konen 14, 17 sich hinsichtlich ihrer Winkel zur jeweiligen Mittellängsachse 18, 21 unterscheiden. In Gebrauchslage liegen die ersten Konen 13, 16 und die zweiten Konen 14, 17 dennoch flächig aufeinander auf, da sich der Schneidring 3 ausgehend von den Figuren 7 und 11 während der Herstellung der in den Figuren 10 und 14 dargestellten Gebrauchslage entsprechend verformt. Erst durch diese Verformung kommen die vorgenannten Konen 13, 14, 16, 17 flächig aufeinander zum Liegen.

Aus den Figuren 10 und 14 geht hervor, dass die Rohrverschraubung 1 insbesondere deshalb fluiddicht ist, weil einerseits die Schneidkanten 11, 12 sich in die Oberfläche des Rohrendabschnitts 2 eingearbeitet haben, und weil andererseits sich die ersten Konen 13, 16 und auch die zweiten Konen 14, 17 flächig aneinander anschmiegen. Fluide, die im Inneren des Rohrs 15 geführt werden, können weder zwischen der Oberfläche des Rohrendabschnitts 2 und dem Schneidring 3 noch zwischen dem Schneidring 3 und dem Stutzen 5 hindurchgelangen, um die Rohrverbindung 1 zu verlassen. Hierbei kann es genügen, wenn die ersten Konen 13, 16 und die erste Schneidkante 11 die vorstehend beschriebene Dichtwirkung bewirken.

Die ersten Konen 13, 16, d.h. der erste Innen-Konus 16 und der erste Aussen-Konus 13, berühren sich während der Montage zuerst, d.h. vor den zweiten Konen 14, 17. Vorzugsweise kommt es hierbei zuerst zu einem Punkt- bzw. Linien-Kontakt und einem Entlanggleiten des ersten Aussen-Konus 13 am ersten Innen-Konus 16, bis ein flächiger Kontakt der vorgenannten Konen 13, 16 ausgebildet wurde. Dies geht aus den Figuren 12 bis 14 hervor. Die zweiten Konen 14, 17, d.h. der zweite Innen-Konus 17 und der zweite Aussen-Konus 14, berühren sich erst nach der Herstellung des vorgenannten flächigen Kontakts der ersten Konen 13, 16. Der flächige Kontakt zwischen den zweiten Konen 14, 17 wird dann vorzugsweise erreicht, indem der Winkel zwischen dem zweiten Aussen-Konus 14 und der Mittellängsachse 18 des Schneidrings 3 durch Verbiegen des Schneidrings 3 vergrössert wird. Dies geht aus einem Vergleich der Figuren 13 und 14 hervor. Auch bei der Herstellung des flächigen Kontakts zwischen den ersten Konen 13, 16 wird der Winkel zwischen dem ersten Aussen-Konus 13 und der Mittellängsachse 18 des Schneidrings 3 vorzugsweise durch Verbiegen des Schneidrings 3 vergrössert, was die Herstellung des vorgenannten flächigen Kontakts zumindest unterstützt. Insbesondere das Einarbeiten der Schneidkanten 11, 12 in die Oberfläche des Rohrendabschnitts 2 kann in Verbindung mit einer Verbiegung des Schneidrings 3 die Herstellung der flächigen Kontakte zwischen den Innen- und Aussen-Konen 13, 14, 16, 17 gewährleisten und umgekehrt.

**Obwohl nur einige bevorzugte Ausführungsbeispiele der Erfindung beschrieben und dargestellt wurden, ist es offensichtlich, dass der Fachmann zahlreiche Modifikationen hinzufügen kann,** ohne den durch die Ansprüche definierten Schutzbereich der Erfindung zu verlassen.

Zunächst sei betont, dass fast alle figürlich dargestellten Bauteile Bestandteil derselben Rohrverschraubung 1 sind. Nur der Schneidring 3a ist eine leichte Abwandlung des Schneidrings 3.

Abgesehen davon kann weiterhin an die nachfolgend beschriebenen, aber in den Figuren nicht dargestellten Alternativen gedacht sein.

Die Konen 13, 14, 16, 17 können von den Konen gemäss den Figuren 1 bis 18 abweichen. Auch anders beschaffene oder anders geformte Konen 13, 14, 16, 17 können sicherstellen, dass in Gebrauchslage die ersten Konen 13, 16 und die zweiten Konen 14, 17 miteinander in Wirkverbindung treten.

Dasselbe gilt für die Schneidkanten 11, 12. Auch anders beschaffene oder anders geformte Konen 13, 14, 16, 17 und/oder anders beschaffene oder anders geformte Schneidkanten 11, 12 können sicherstellen, dass während der Herstellung der Gebrauchslage zunächst die erste Schneidkante 11 und anschliessend die zweite Schneidkante 12 in den Rohrendabschnitt 2 bzw. in dessen Oberfläche einschneiden.

Anstelle der Hohlschraube 4 kann ein anderes geeignetes Gegenlager vorgesehen sein. Dieses ist vorzugsweise stets eingerichtet, den Schneidring 3 in die Gebrauchslage zu bewegen. Hierfür kann das Gegenlager beispielsweise in Abweichung von den Figuren ein Innengewinde aufweisen, welches mit einem Aussengewinde des Stutzens korrespondiert. Weitere Alternativen sind denkbar.

Der Schneidring 3 und die Hohlschraube 4 oder im Allgemeinen der Schneidring 3 und das Gegenlager können alternativ zu den Ausführungsvarianten der Figuren 1 bis 18 einstückig ausgeführt sein. Hierbei können Schneidring 3 und Gegenlager, beispielsweise Hohlschraube 4, dauerhaft oder über eine Sollbruchstelle miteinander verbunden sein. Eine Sollbruchstelle kann dazu dienen, den Schneidring 3 während des Eindrehens, das beispielsweise in den Figuren 8 bis 10 gezeigt ist, vom Gegenlager zu lösen.

Die Kontaktflächen 19, 20 sind vorzugsweise etwa 85° zu den Mittellängsachsen 18, 30 geneigt. Abweichungen sind denkbar.

Mit der in Figur 17 dargestellten Rohrverschraubung 1 können zwei Rohre 15 an ihren Rohrendabschnitten 2 miteinander verbunden werden. Ausgehend von Figur 17 kann an zahlreiche alternative Ausführungsvarianten gedacht sein, welche alternative Einrichtungen 6 zur Anbindung an weitere Komponenten eines Rohrleitungssystems umfassen. Hierbei muss nicht zwingend eine Symmetrie-Achse 24 vorhanden sein. Der Stutzen 5 kann also in Abwandlung der in Figur 17 dargestellten Variante links und rechts jeweils unterschiedlich beschaffen sein.

Vorzugsweise ist die erste Schneidkante 11 dem ersten Aussen-Konus 13 und die zweite Schneidkante 12 dem zweiten Aussen-Konus 14 zugeordnet. Wie aus den Figuren 1, 5, 6, 9 und 15 in Zusammenschau hervorgeht, kann die erste Schneidkante 11 bezogen auf die Mittellängsachse 18 in etwa auf der Höhe des ersten Aussen-Konus 13 und die zweite Schneidkante 12 in etwa auf der Höhe des zweiten Aussen-Konus 14 angeordnet sein. Vorzugsweise sind die Schneidkanten 11, 12 hierbei in Bezug auf die Ausdehnung der Aussen-Konen 13, 14 entlang der Mittellängsachse 18 nicht mittig, sondern randständig angeordnet. Sie befinden sich vorzugsweise an einem Rand der Konen 13, 14, welcher dem ersten Ende 9 des Schneidrings 3 näher ist. Die zweite Schneidkante 12 kann hierbei ausgehend von Figur 15 auch ein Stück nach rechts verschoben sein.

Die Aussen-Konen 13, 14 und die Innen-Konen 16, 17 grenzen in den figürlich dargestellten Ausführungsvarianten jeweils unmittelbar aneinander. Beispielsweise schliesst sich an den ersten Aussen-Konus 13 unmittelbar der zweite Aussen-Konus 14 an. Es kann alternativ angedacht sein, die Aussen-Konen 13, 14 auf dem Schneidring 3 und die Innen-Konen 16, 17 in dem Stutzen 5 nicht unmittelbar aneinandergrenzend anzuordnen, sondern einen kleinen Abstand zwischen diesen Konen vorzusehen.

Besonders bevorzugt sind Schneidringe 3, 3a mit zwei Aussen-Konen 13, 14 und zwei bis drei Schneidkanten 11, 12, 22. Die dritte Schneidkante 22 ist hierbei optional. Sie kann sich zusätzlich zu den beiden anderen Schneidkanten 11, 12, vorzugsweise zeitlich nach der zweiten Schneidkante 12, in den Rohrendabschnitt 2 einarbeiten. Alternativ kann die dritte Schneidkante 22 in Gebrauchslage nur auf dem Rohrendabschnitt 2 aufliegen. Liegt die dritte Schneidkante 22, falls vorhanden, nur auf dem Rohrendabschnitt 2 auf, so kann sie als Stützkante dienen. Weiter alternativ kann in sämtlichen dargestellten Varianten der alternative Schneidring 3a zum Einsatz kommen, der keine dritte Schneidkante 22 aufweist.

In Bezug auf die Figuren 12 bis 14 kann auch an eine Ausführungsform gedacht sein, bei der sich die zweiten Konen 14, 17, d.h. der zweite Innen-Konus 17 und der zweite Aussen-Konus 14, bereits berühren, bevor der flächige Kontakt zwischen den ersten Konen 13, 16 vollständig hergestellt wurde.

Den Figuren 1, 5 und 6 ist in Zusammenschau zu entnehmen, dass die erste Schneidkante 11 vorzugsweise einen Abschnitt des ersten Endes 9 des Schneidrings 3, 3a bildet oder zumindest an diesem ersten Ende 9 angeordnet ist. Die Kontaktfläche 19 bildet vorzugsweise das zweite Ende 10 des Schneidrings 3, 3a oder ist an diesem Ende 10 angeordnet. Somit ist zwischen dem ersten Ende 9 des Schneidrings 3, 3a und der zuerst einschneidenden ersten Schneidkante 11 kein Abschnitt des Schneidrings 3, 3a vorhanden. Alternativen sind möglich, innerhalb des von den Ansprüchen definierten Schutzbereichs der Erfindung.

### Bezugszeichenliste

| | |
|---|---|
| 1 | Rohrverschraubung |
| 2 | Rohrendabschnitt |
| 3 | Schneidring |
| 4 | Hohlschraube |
| 5 | Stutzen |
| 6 | Einrichtung zur Anbindung an weitere Komponenten eines Rohrleitungssystems |
| 7 | Innengewinde |
| 8 | Aussengewinde |
| 9 | erstes Ende |
| 10 | zweites Ende |
| 11 | erste Schneidkante |
| 12 | zweite Schneidkante |
| 13 | erster Aussen-Konus |
| 14 | zweiter Aussen-Konus |
| 15 | Rohr |
| 16 | erster Innen-Konus |
| 17 | zweiter Innen-Konus |
| 18 | Mittellängsachse des Schneidrings |
| 19 | Kontaktfläche des Schneidrings |
| 20 | Kontaktfläche der Hohlschraube |
| 21 | Mittellängsachse des Stutzens |
| 22 | dritte Schneidkante |
| 23 | aufgebogener Abschnitt |
| 24 | Symmetrie-Achse |
| 25 | Anschlag |
| 26 | Linienkontakt |
| 27 | Wulst |
| 28 | Rohrende |
| 29 | Rohrführungs-Abschnitt |
| 30 | Mittellängsachse der Hohlschraube |
| 31 | Aussensechskant |
| 32 | |
| 33 | |

## Patentansprüche

1. Rohrverschraubung (1) umfassend
einen Stutzen (5), einen Schneidring (3) und ein Gegenlager (4),
wobei der Stutzen (5) zur Aufnahme und Lagerung eines zu einem Rohr (15) gehörenden Rohrendabschnitts (2) und des Schneidrings (3) sowie zur zumindest teilweisen Aufnahme des Gegenlagers (4) eingerichtet ist,
wobei die Rohrverschraubung (1) derart beschaffen ist, dass das Gegenlager (4) und der Schneidring (3) auf das Rohr (15) aufgeschoben werden,
wobei der Schneidring (3) ein erstes und ein zweites Ende (9, 10) aufweist, wobei das erste Ende (9) in Gebrauchslage näher an einem Rohrende (28) des Rohrs (15) angeordnet ist, als das zweite Ende (10),
**dadurch gekennzeichnet, dass**
im inneren des Schneidrings (3) zumindest zwei Schneidkanten (11, 12) angeordnet sind, wobei die erste Schneidkante (11) näher am ersten Ende (9) angeordnet ist, als die zweite Schneidkante (12),
wobei eine äussere Oberfläche des Schneidrings (3) zumindest einen ersten Aussen-Konus (13) und einen zweiten Aussen-Konus (14) umfasst, wobei der erste Aussen-Konus (13) näher am ersten Ende (9) angeordnet ist,
wobei der erste Aussen-Konus (13) in Gebrauchslage näher am Rohrende (28) angeordnet ist, als der zweite Aussen-Konus (14),
wobei ferner der erste Aussen-Konus (13) einen kleineren Winkel mit einer Mittellängsachse (18) des Schneidrings (3) einschliesst, als der zweite Aussen-Konus (14),
wobei eine innere Oberfläche des Stutzens (5) zumindest einen ersten Innen-Konus (16) und einen zweiten Innen-Konus (17) umfasst,
wobei der erste Innen-Konus (16) einen kleineren Winkel mit einer Mittellängsachse (21) des Stutzens (5) einschliesst, als der zweite Innen-Konus (17),
wobei der erste Innen-Konus (16) eingerichtet ist, in Gebrauchslage mit dem ersten Aussen-Konus (13) in Wirkverbindung zu treten, und wobei der zweite Innen-Konus (17) eingerichtet ist, in Gebrauchslage mit dem zweiten Aussen-Konus (14) in Wirkverbindung zu treten,
wobei die Gebrauchslage herstellbar ist, indem das Gegenlager (4) den Schneidring (3) in den Stutzen (5) hineinbewegt,
wobei die Konen (13, 14, 16, 17) derart bemessen und angeordnet sind, dass während der Herstellung der Gebrauchslage zunächst die erste Schneidkante (11) und anschliessend die zweite Schneidkante (12) in eine Oberfläche des Rohrendabschnitts (2) einschneidet.

2. Rohrverschraubung (1) nach Anspruch 1, **dadurch gekennzeichnet, dass** der Stutzen (5) ein Innengewinde (7) aufweist, welches mit einem Aussengewinde (8) des Gegenlagers (4) korrespondiert.

3. Rohrverschraubung (1) nach einem der Ansprüche 1 oder 2, **dadurch gekennzeichnet, dass** die Rohrverschraubung (1) den Stutzen (5), den Schneidring (3) und das Gegenlager (4) als separat gefertigte Bauteile umfasst oder aus diesen Bauteilen besteht.

4. Rohrverschraubung (1) nach zumindest einem der vorangehenden Ansprüche, **dadurch gekennzeichnet, dass** der Winkel zwischen dem ersten Innen-Konus (16) und der Mittellängsachse (21) des Stutzens (5) grösser ist, als der Winkel zwischen dem ersten Aussen-Konus (13) und der Mittellängsachse (18) des Schneidrings (3), und dass der Winkel zwischen dem zweiten Innen-Konus (17) und der Mittellängsachse (21) des Stutzens (5) grösser ist, als der Winkel zwischen dem zweiten Aussen-Konus (14) und der Mittellängsachse (18) des Schneidrings (3).

5. Rohrverschraubung (1) nach zumindest einem der vorangehenden Ansprüche, **dadurch gekennzeichnet, dass** der Winkel zwischen dem ersten Aussen-Konus (13) und der Mittellängsachse (18) des Schneidrings (3) zwischen 10° und 24°, vorzugsweise zwischen 13° und 21°, weiter bevorzugt zwischen 15° und 19° beträgt, und dass der Winkel zwischen dem zweiten Aussen-Konus (14) und der Mittellängsachse (18) des Schneidrings (3) zwischen 20° und 35°, vorzugsweise zwischen 22° und 32°, weiter bevorzugt zwischen 24° und 29° beträgt.

6. Rohrverschraubung (1) nach zumindest einem der vorangehenden Ansprüche, **dadurch gekennzeichnet, dass** der Winkel zwischen dem ersten Innen-Konus (16) und der Mittellängsachse (21) des Stutzens (5) zwischen 17° und 31°, und dass der Winkel zwischen dem zweiten Innen-Konus (17) und der Mittellängsachse (21) des Stutzens (5) zwischen 28° und 43° beträgt.

7. Rohrverschraubung (1) nach zumindest einem der vorangehenden Ansprüche, **gekennzeichnet durch** genau ein einstückiges in Gebrauchslage in das Rohr (15) einschneidendes Bauteil in Form des Schneidrings (3).

8. Rohrverschraubung (1) nach zumindest einem der vorangehenden Ansprüche, **dadurch gekennzeichnet, dass** Kontaktflächen (19, 20) des Schneidrings (3) und des Gegenlagers (4) eine Neigung zu den Mittellängsachsen (18, 30) zwischen 81° und 89°, vorzugsweise zwischen 83° und 87°, weiter bevorzugt eine Neigung zwischen 84° und 86°, besonders bevorzugt von etwa 85° aufweisen.

9. Rohrverschraubung (1) nach zumindest einem der vorangehenden Ansprüche, **dadurch gekennzeichnet, dass** der Stutzen (5) ferner eine Einrichtung (6) zur Anbindung an weitere Komponenten eines Rohrleitungssystems umfasst.

10. Rohrverschraubung (1) nach zumindest einem der vorangehenden Ansprüche, **dadurch gekennzeichnet, dass** der erste Aussen-Konus (13) der ersten Schneidkante (11) zugeordnet ist, und dass der zweite Aussen-Konus (14) der zweiten Schneidkante (12) zugeordnet ist.

11. Rohrverschraubung (1) nach zumindest einem der vorangehenden Ansprüche, **dadurch gekennzeichnet, dass** die Innen-Konen (16, 17) in Gebrauchslage unmittelbar mit den Aussen-Konen (13, 14) in Wirkverbindung treten.

12. Verwendung einer Rohrverschraubung (1) gemäss zumindest einem der Ansprüche 1 bis 11 zur Herstellung einer Verbindung zwischen einem Rohr (15) und der Rohrverschraubung (1).

13. Verwendung einer Rohrverschraubung (1) gemäss Anspruch 12 zur Durchleitung von Fluiden mit einem Druck von bis zu 2650 bar.

14. Verfahren zur Herstellung einer Verbindung zwischen einem Rohr (15) und einer Rohrverschraubung (1) gemäss zumindest einem der Ansprüche 1 bis 11, das Verfahren umfassend die folgenden Schritte:
- Bereitstellen eines Rohrs (15) sowie einer Rohrverschraubung (1) gemäss zumindest einem der Ansprüche 1 bis 11,
- Aufschieben des Gegenlagers (4) und des Schneidrings (3) auf einen Rohrendabschnitt (2) des Rohrs (15),
- Einbringen des Rohrendabschnitts (2) und des Schneidrings (3) in den Stutzen (5),
- Beaufschlagung des Schneidrings (3) mit einer im Wesentlichen entlang der Mittellängsachsen (18, 21) wirkenden Kraft durch das Gegenlager (4), um den Schneidring in den Stutzen (5) zu pressen.

## Claims

1. A pipe fitting (1) comprising:
a connector (5), a cutting ring (3), and a counter-bearing (4),
wherein the connector (5) is configured to receive and support a pipe end portion (2) belonging to a pipe (15) and the cutting ring (3), as well as to at least partially receive the counter-bearing (4),
wherein the pipe fitting (1) is configured such that the counter-bearing (4) and the cutting ring (3) are pushed onto the pipe (15),
wherein the cutting ring (3) has a first and a second end (9, 10), wherein, in a position of use, the first end (9) is arranged closer to a pipe end (28) of the pipe (15) than the second end (10),
**characterized in that**
at least two cutting edges (11, 12) are arranged in the interior of the cutting ring (3), wherein the first cutting edge (11) is arranged closer to the first end (9) than the second cutting edge (12),
wherein an outer surface of the cutting ring (3) comprises at least a first outer cone (13) and a second outer cone (14), wherein the first outer cone (13) is arranged closer to the first end (9),
wherein, in the position of use, the first outer cone (13) is arranged closer to the pipe end (28) than the second outer cone (14),
wherein furthermore the first outer cone (13) forms a smaller angle with a central longitudinal axis (18) of the cutting ring (3) than the second outer cone (14),
wherein an inner surface of the connector (5) comprises at least a first inner cone (16) and a second inner cone (17),
wherein the first inner cone (16) forms a smaller angle with a central longitudinal axis (21) of the connector (5) than the second inner cone (17),
wherein the first inner cone (16) is configured to operatively engage with the first outer cone (13) in the position of use, and wherein the second inner cone (17) is configured to operatively engage with the second outer cone (14) in the position of use,
wherein the position of use can be established by the counter-bearing (4) moving the cutting ring (3) into the connector (5),
wherein the cones (13, 14, 16, 17) are dimensioned and arranged such that during the establishment of the position of use, first the first cutting edge (11) and subsequently the second cutting edge (12) cuts into a surface of the pipe end portion (2).

2. The pipe fitting (1) according to claim 1, **characterized in that** the connector (5) has an internal thread (7) which corresponds to an external thread (8) of the counter-bearing (4).

3. The pipe fitting (1) according to one of claims 1 or 2, **characterized in that** the pipe fitting (1) comprises the connector (5), the cutting ring (3), and the counter-bearing (4) as separately manufactured components or consists of these components.

4. The pipe fitting (1) according to at least one of the preceding claims, **characterized in that** the angle between the first inner cone (16) and the central longitudinal axis (21) of the connector (5) is larger than the angle between the first outer cone (13) and the central longitudinal axis (18) of the cutting ring (3), and **in that** the angle between the second inner cone (17) and the central longitudinal axis (21) of the connector (5) is larger than the angle between the second outer cone (14) and the central longitudinal axis (18) of the cutting ring (3).

5. The pipe fitting (1) according to at least one of the preceding claims, **characterized in that** the angle between the first outer cone (13) and the central longitudinal axis (18) of the cutting ring (3) is between 10° and 24°, preferably between 13° and 21°, more preferably between 15° and 19°, and **in that** the angle between the second outer cone (14) and the central longitudinal axis (18) of the cutting ring (3) is between 20° and 35°, preferably between 22° and 32°, more preferably between 24° and 29°.

6. The pipe fitting (1) according to at least one of the preceding claims, **characterized in that** the angle between the first inner cone (16) and the central longitudinal axis (21) of the connector (5) is between 17° and 31°, and **in that** the angle between the second inner cone (17) and the central longitudinal axis (21) of the connector (5) is between 28° and 43°.

7. The pipe fitting (1) according to at least one of the preceding claims, **characterized by** exactly one one-piece component in the form of the cutting ring (3) which cuts into the pipe (15) in the position of use.

8. The pipe fitting (1) according to at least one of the preceding claims, **characterized in that** contact surfaces (19, 20) of the cutting ring (3) and of the counter-bearing (4) have an inclination relative to the central longitudinal axes (18, 30) of between 81° and 89°, preferably between 83° and 87°, more preferably an inclination between 84° and 86°, particularly preferably of approximately 85°.

9. The pipe fitting (1) according to at least one of the preceding claims, **characterized in that** the connector (5) further comprises a device (6) for connection to further components of a piping system.

10. The pipe fitting (1) according to at least one of the preceding claims, **characterized in that** the first outer cone (13) is associated with the first cutting edge (11), and **in that** the second outer cone (14) is associated with the second cutting edge (12).

11. The pipe fitting (1) according to at least one of the preceding claims, **characterized in that**, in the position of use, the inner cones (16, 17) operatively engage directly with the outer cones (13, 14).

12. Use of a pipe fitting (1) according to at least one of claims 1 to 11 for producing a connection between a pipe (15) and the pipe fitting (1).

13. Use of a pipe fitting (1) according to claim 12 for conducting fluids at a pressure of up to 2650 bar.

14. A method for producing a connection between a pipe (15) and a pipe fitting (1) according to at least one of claims 1 to 11, the method comprising the following steps:
• providing a pipe (15) and a pipe fitting (1) according to at least one of claims 1 to 11,
• pushing the counter-bearing (4) and the cutting ring (3) onto a pipe end portion (2) of the pipe (15),
• introducing the pipe end portion (2) and the cutting ring (3) into the connector (5),
• applying a force acting substantially along the central longitudinal axes (18, 21) to the cutting ring (3) by means of the counter-bearing (4) in order to press the cutting ring into the connector (5).

## Revendications

1. Raccord fileté pour tuyaux (1) comprenant
une tubulure (5), une bague coupante (3) et une butée (4),
dans lequel la tubulure (5) est configurée pour la réception et le logement d'une section d'extrémité de tuyau (2) appartenant à un tuyau (15) et de la bague coupante (3) ainsi que pour la réception au moins partielle de la butée (4),
dans lequel le raccord de tuyauterie (1) est conçu de telle sorte que la butée (4) et la bague coupante (3) sont enfilées sur le tuyau (15),
dans lequel la bague coupante (3) présente une première et une seconde extrémité (9, 10),
dans lequel la première extrémité (9) est disposée plus près d'une extrémité de tuyau (28) du tuyau (15) que la seconde extrémité (10) en position d'utilisation,
**caractérisé en ce que**
au moins deux arêtes de coupe (11, 12) sont disposées à l'intérieur de la bague coupante (3), dans lequel la première arête de coupe (11) est disposée plus près de la première extrémité (9) que la seconde arête de coupe (12),
dans lequel une surface extérieure de la bague coupante (3) comprend au moins un premier cône externe (13) et un second cône externe (14), dans lequel le premier cône externe (13) est disposé plus près de la première extrémité (9),
dans lequel le premier cône externe (13) est disposé plus près de l'extrémité de tuyau (28) que le second cône externe (14) en position d'utilisation,
dans lequel en outre le premier cône externe (13) forme un angle plus petit avec un axe longitudinal médian (18) de la bague coupante (3) que le second cône externe (14),
dans lequel une surface intérieure de la tubulure (5) comprend au moins un premier cône interne (16) et un second cône interne (17),
dans lequel le premier cône interne (16) forme un angle plus petit avec un axe longitudinal médian (21) de la tubulure (5) que le second cône interne (17),
dans lequel le premier cône interne (16) est configuré pour entrer en liaison fonctionnelle avec le premier cône externe (13) en position d'utilisation, et dans lequel le second cône interne (17) est configuré pour entrer en liaison fonctionnelle avec le second cône externe (14) en position d'utilisation,
dans lequel la position d'utilisation peut être établie du fait que la butée (4) déplace la bague coupante (3) à l'intérieur de la tubulure (5),
dans lequel les cônes (13, 14, 16, 17) sont dimensionnés et agencés de telle sorte que, lors de l'établissement de la position d'utilisation, tout d'abord la première arête de coupe (11) puis la seconde arête de coupe (12) incise une surface de la section d'extrémité de tuyau (2).

2. Raccord fileté pour tuyaux (1) selon la revendication 1, **caractérisé en ce que** la tubulure (5) présente un filetage intérieur (7) qui correspond à un filetage extérieur (8) de la butée (4).

3. Raccord fileté pour tuyaux (1) selon l'une quelconque des revendications 1 ou 2, **caractérisé en ce que** le raccord de tuyauterie (1) comprend la tubulure (5), la bague coupante (3) et la butée (4) en tant que composants fabriqués séparément ou est constitué de ces composants.

4. Raccord fileté pour tuyaux (1) selon au moins l'une des revendications précédentes, **caractérisé en ce que** l'angle entre le premier cône interne (16) et l'axe longitudinal médian (21) de la tubulure (5) est plus grand que l'angle entre le premier cône externe (13) et l'axe longitudinal médian (18) de la bague coupante (3), et que l'angle entre le second cône interne (17) et l'axe longitudinal médian (21) de la tubulure (5) est plus grand que l'angle entre le second cône externe (14) et l'axe longitudinal médian (18) de la bague coupante (3).

5. Raccord fileté pour tuyaux (1) selon au moins l'une des revendications précédentes, **caractérisé en ce que** l'angle entre le premier cône externe (13) et l'axe longitudinal médian (18) de la bague coupante (3) est compris entre 10° et 24°, de préférence entre 13° et 21°, plus préférentiellement entre 15° et 19°, et que l'angle entre le second cône externe (14) et l'axe longitudinal médian (18) de la bague coupante (3) est compris entre 20° et 35°, de préférence entre 22° et 32°, plus préférentiellement entre 24° et 29°.

6. Raccord fileté pour tuyaux (1) selon au moins l'une des revendications précédentes, **caractérisé en ce que** l'angle entre le premier cône interne (16) et l'axe longitudinal médian (21) de la tubulure (5) est compris entre 17° et 31°, et que l'angle entre le second cône interne (17) et l'axe longitudinal médian (21) de la tubulure (5) est compris entre 28° et 43°.

7. Raccord fileté pour tuyaux (1) selon au moins l'une des revendications précédentes, **caractérisé par** exactement un composant monobloc incisant le tuyau (15) en position d'utilisation sous la forme de la bague coupante (3).

8. Raccord fileté pour tuyaux (1) selon au moins l'une des revendications précédentes, **caractérisé en ce que** des surfaces de contact (19, 20) de la bague coupante (3) et de la butée (4) présentent une inclinaison par rapport aux axes longitudinaux médians (18, 30) comprise entre 81° et 89°, de préférence entre 83° et 87°, plus préférentiellement une inclinaison comprise entre 84° et 86°, de manière particulièrement préférée d'environ 85°.

9. Raccord fileté pour tuyaux (1) selon au moins l'une des revendications précédentes, **caractérisé en ce que** la tubulure (5) comprend en outre un dispositif (6) pour le raccordement à d'autres composants d'un système de tuyauterie.

10. Raccord fileté pour tuyaux (1) selon au moins l'une des revendications précédentes, **caractérisé en ce que** le premier cône externe (13) est associé à la première arête de coupe (11), et que le second cône externe (14) est associé à la seconde arête de coupe (12).

11. Raccord fileté pour tuyaux (1) selon au moins l'une des revendications précédentes, **caractérisé en ce que** les cônes internes (16, 17) entrent en liaison fonctionnelle directement avec les cônes externes (13, 14) en position d'utilisation.

12. Utilisation d'un raccord de tuyauterie (1) selon au moins l'une des revendications 1 à 11 pour l'établissement d'une liaison entre un tuyau (15) et le raccord de tuyauterie (1).

13. Utilisation d'un raccord de tuyauterie (1) selon la revendication 12 pour le passage de fluides avec une pression allant jusqu'à 2650 bar.

14. Procédé pour l'établissement d'une liaison entre un tuyau (15) et un raccord de tuyauterie (1) selon au moins l'une des revendications 1 à 11, le procédé comprenant les étapes suivantes :
• la fourniture d'un tuyau (15) ainsi que d'un raccord de tuyauterie (1) selon au moins l'une des revendications 1 à 11,
• l'enfilage de la butée (4) et de la bague coupante (3) sur une section d'extrémité de tuyau (2) du tuyau (15),
• l'introduction de la section d'extrémité de tuyau (2) et de la bague coupante (3) dans la tubulure (5),
• la sollicitation de la bague coupante (3) avec une force agissant sensiblement le long des axes longitudinaux médiaux (18, 21) par la butée (4), afin de presser la bague coupante dans la tubulure (5).
